# EUROPEAN PATENT APPLICATION

(11) **EP 4 835 102 A1**
(43) Date of publication of application: **04.11.2026**
(21) Application number: 26175310.7
(22) Date of filing: 29.04.2026
(51) Int. Cl.: C21D 8/02, B21B 1/04, B22D 11/00, B22D 11/14, B22D 11/16, C21C 5/28, C21C 5/52, C21C 5/56, C21D 9/00, C21D 9/46, C21D 9/52, F27B 9/22, C21D 8/06

(54) **CONTINUOUS HIGH DECARBONIZATION STEEL PRODUCTION METHOD AND SYSTEM**

(30) Priority: 30.04.2025 IT 202500009690
(71) Applicant: Pomini Long Rolling Mills Srl, 20025 Legnano (MI) (IT)
(72) Inventor: POMETTO, Virginio, I-20813 Bovisio Masciago (MB) (IT); COLOMBO, Ezio, I-20136 Milano (MI) (IT)
(74) Representative: Dragotti & Associati S.P.A.

(57) **Abstract**

A continuous high decarbonization steel production system comprises a plurality of operating stations (10, 20, 30, 40, 50, 60) arranged successively along a direction of movement of semi-finished steel products (X), including a melting furnace (10) configured to produce a metal bath; a multi-line continuous casting machine (15) configured to produce a plurality of semi-finished steel products (5); a transfer unit (60) of the semi-finished steel products (5) configured to transfer the semi-finished steel products (5) from the multi-line continuous casting machine (15) to a subsequent operating station; a reheating furnace (40) configured to heat the semi-finished steel products (5) to a predetermined temperature value; a welding station (30) configured to weld the semi-finished steel products (5) together to obtain a continuous semi-finished product (7); and a continuous rolling unit (20) configured to roll the continuous semi-finished product (7).

## Description

The present invention relates to the sector of steel production, and has been developed with particular reference to a continuous high decarbonization steel production method and system.

Steel production contributes significantly to both energy demand and global emissions of harmful substances, accounting for about 8% of global energy demand and 7% of total CO₂ emissions. This significant environmental impact is largely due to the industry's heavy dependence on coal. Steel production involves both the use of iron and recycled steel scrap, with primary production being coal-intensive and secondary production using electricity. Despite the progresses in the energy efficiency field, the steel industry has still to face substantial challenges, with each tonne of steel produced resulting in significant CO₂ emissions.

In the short term, technological performance improvements within conventional pathways and demand reduction through material efficiency play a major role. In the medium to long term, the capture and utilisation of carbon dioxide (CCUS) and the transition from coal to natural gas, hydrogen and bioenergy are becoming increasingly important.

However, despite the progresses made, the industry continues to be faced with challenges in reducing energy intensity and emissions, and the reductions of the emissions achieved so far have not been sufficient to achieve the targets set by international agreements.

Therefore, the need arose to create innovative technologies capable of reducing emissions in steel production in the medium and long term.

The general aim of the present invention is to meet this need by providing a method and system capable of reducing the environmental impact of continuous steel production by minimising CO₂ emissions and which, at the same time, are capable of guaranteeing high productivity and efficiency.

In view of this aim, the Owner has considered implementing, according to the invention, a continuous high decarbonization steel production method and system as defined in claims 1 and 7.

The dependent claims define further innovative features of the present invention.

Further features and advantages of the present invention will be evident from the following description.

Reference will now be made in detail to the various embodiments of the invention, one or more examples of which are illustrated in the accompanying figures, in which:

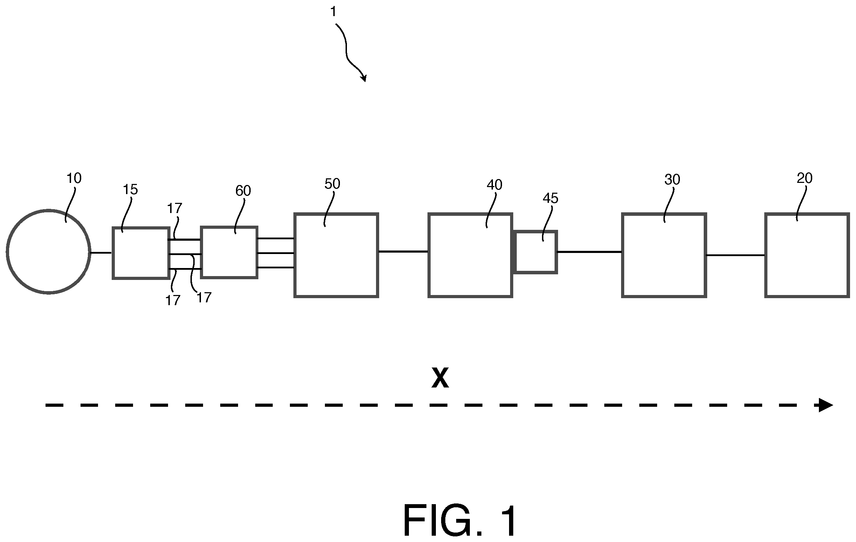

- Figure 1 is a schematic block view of a continuous high decarbonization steel production system according to the present invention;
- Figure 2 is a schematic block view of a steel production plant of known type with evidence of the production volumes; and
- Figure 3 is a schematic block view of a steel production plant according to the present invention with evidence of the production volumes.

Identical reference numbers have been used when possible to identify common identical elements in the figures to facilitate comprehension. It is to be understood that elements and characteristics of one embodiment may conveniently be incorporated into other embodiments without further clarifications.

Each example is provided merely to illustrate the invention and is not intended as a limitation thereof. For example, the technical characteristics illustrated or described because they belong to one embodiment may be implemented in, or in association with, other embodiments in order to generate a further embodiment. It is understood that the present invention will be comprehensive of such modifications and variations.

A continuous high decarbonization steel production system according to the present invention, generically indicated with 1, comprises a plurality of operating stations arranged successively along a direction of movement X of semi-finished steel products.

The steel production system 1 comprises a melting furnace 10, for example an electric arc furnace (EAF), configured to produce a metal bath with a predetermined chemical composition.

The steel production system 1 further comprises a multi-line continuous casting machine 15, connected to the melting furnace 10 and comprising a plurality of continuous casting lines 17, parallel to each other and each configured to produce a plurality of semi-finished steel products with finished length, for example billets 5, using the metal solutions of the melting furnace 10.

The steel production system 1 further comprises a billet rolling unit 20, arranged downstream of the melting furnace 10 along the direction of movement X of semi-finished steel products. Preferably, the rolling unit 20 comprises at least one rolling mill, even more preferably a single rolling mill, configured to roll semi-finished steel products coming from the casting lines 17. According to a particularly advantageous feature of the present invention the rolling unit 20 is a rolling unit with continuous rolling operation.

This feature is particularly advantageous, among other things, to reduce CO₂ emissions and thus favour the decarbonization of the steel production system 1 of the present invention.

According to embodiments of the present invention, the steel production system 1 comprises a welding station 30, arranged downstream of the melting furnace 10 along the direction of movement X of semi-finished steel products and upstream of the rolling unit 20. The welding station 30 is configured to weld together the billets 5 coming from the casting lines 17 and arranged successively along the direction of movement X of the semi-finished products, and to realize a single continuous semi-finished steel product 7 to be supplied in input to the rolling unit 20.

According to embodiments, the steel production system 1 comprises a billet conveyor 5 arranged upstream of the welding station 30 and configured to carry the plurality of billets 5 produced by each casting line 17, and therefore arranged along a plurality of advancement paths, on a single advancement path, so as to be arranged in a row one after the other along said single advancement path. The conveyor can be arranged indifferently after the reheating furnace 40 or inside the reheating furnace 40, or in any other position of the steel production system 1 that is comprised between the welding station 20 and the multi-line casting machine 15 along the direction of movement X of the semi-finished products, without thereby departing from the scope of the present invention.

The welding station 30 therefore allows the rolling mill to perform a continuous rolling of a continuous semi-finished steel product 7, despite being fed by a plurality of casting lines 17.

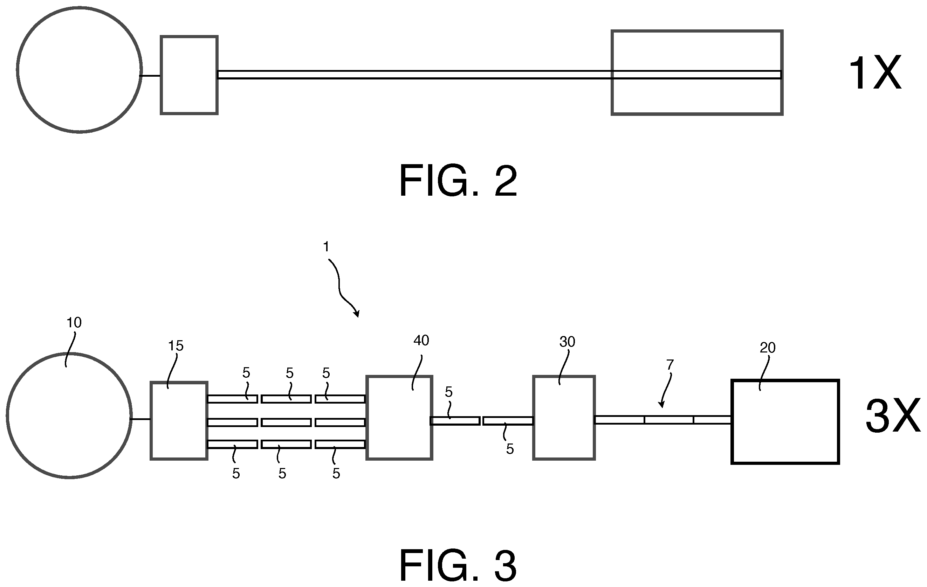

This feature is particularly advantageous for many aspects, including the increase in plant productivity. For example, with reference to Figure 2, production plants are known which, in order to allow a continuous rolling, comprise a melting furnace and a continuous casting machine that produces a continuous semi-finished product. Such solutions, however, have some disadvantages, including the need to have a continuous casting line for each rolling mill, since the semi-finished product produced is continuous. This constraint forces an increase in the continuous casting lines and corresponding rolling mills to increase the production capacity of the plant.

As depicted in Figure 3, the solution of the present invention allows multiple casting lines 17 to be associated with a single rolling mill, increasing the productivity of the steel production system 1.

Furthermore, the production volumes of a continuous casting line, in terms of mass values of cast steel per unit of time, and of a rolling mill, in terms of mass values of rolled steel per similar unit of time, may sometimes, indeed often, not coincide. In other words, if the continuous casting line produces fewer tons of steel than the rolling mill is able to roll, the production plant faces significant production inefficiencies and/or is forced to increase the casting speed.

A further advantage of the present invention is therefore constituted by the fact that it allows the steel to be cast at the most suitable casting speeds based on the type of alloy of which it is formed, to cast a wider range of steel alloys allowing the casting speed to be adapted to the technologically most suitable one and without impediments or in any case risky forcing, and to reduce the costs of wear and maintenance of the system.

According to embodiments of the present invention, the steel production system 1 comprises a reheating furnace 40, arranged upstream of the welding station 30 along the direction of movement X of semi-finished steel products. The reheating furnace 40 is configured to maintain or increase the temperature of the billets 5 to a predetermined value. Preferably, the predetermined temperature value corresponds to, or is close to, a rolling temperature sufficient to roll a semi-finished steel product within the rolling mill of the rolling unit 20.

Preferably, the reheating furnace 40 is a combustion heating system, comprising a furnace chamber inside which the billets 5 coming from the casting lines 17 pass. According to this embodiment, the reheating furnace 40 comprises one or more flameless burners, and is configured to produce hot fumes with a low oxygen content within the furnace chamber. Preferably, the burners are fed by fuel mixtures, from natural gas to hydrogen, so as to reduce the overall amount of CO₂ produced by the system of the present invention.

According to further embodiments, the steel production system 1 may also comprise a solid oxide electrolyser cell (SOEC) connected to the reheating furnace 40.

Alternatively, the reheating furnace 40 may be an electric induction furnace. According to other embodiments, the steel production system 1 comprises an electric heating unit 45, preferably a direct heating unit by Joule effect. The electric heating unit 45 may be an electric furnace independent from the reheating furnace 40 and arranged downstream of the reheating furnace 40 along the direction of movement X of semi-finished steel products. In other embodiments, the heating unit 45 is integrated within the reheating furnace 40.

The use of the electric heating unit 45 further increases the decarbonization of the steel production system 1 of the present invention, as it allows to reduce the use of the reheating furnace 40, therefore its consumption and therefore the emission of CO₂. In addition, the electric heating unit 45 can be selectively activated, i.e. on-demand, and allows to heat the billets 5 at higher temperatures and faster than in a combustion furnace, optimising the production cycle and reducing the overall consumption of the steel production system 1.

According to embodiments, the steel production system 1 comprises a billet buffer (not illustrated) that allows to adjust the flow of billets 5 within the reheating furnace 40. Preferably, the buffer is arranged upstream of the reheating furnace 40 along the direction of movement X of the semi-finished steel products, and is configured to decrease or increase the number of billets 5 in input to the reheating furnace depending on whether the number of billets produced by the casting lines 17 of the casting machine 15 is greater or less than the production capacity of the rolling unit 20. For example, the buffer can comprise a storage area in which the billets 5 coming from the casting lines 17 are arranged or from which the billets 5 are taken, removing them or adding them respectively to the billets 5 in input to the reheating furnace 40.

According to embodiments the billet buffer comprises the billet conveyor described above.

According to other embodiments, the steel production system 1 comprises a preheating unit 50, arranged upstream of the reheating furnace 40 along the direction of movement X of semi-finished steel products.

According to embodiments of the present invention, both the reheating furnace 40 and the preheating unit 50 comprise a combustion heating system, a direct electric heating system by Joule effect, an induction heating system or mixed heating systems, comprising both a combustion and an electric and/or induction system.

In this way, the production system according to the present invention allows a high operational flexibility, optimizing the thermal management of the semi-finished products as a function of the operating conditions and specific production needs.

According to further embodiments, the steel production system 1 may also comprise a billet transfer unit 60, arranged downstream of the continuous casting lines 17 of the multi-line continuous casting machine 15 along the direction of movement X of semi-finished steel products, and upstream of the preheating unit 50 or the reheating furnace 40. The transfer unit 60 is configured to transfer the billets 5 from the continuous casting lines 17 towards subsequent operating stations. Preferably, the transfer unit 60 comprises a billet conveyor with a plurality of roller conveyor lines, as well as a roller transfer table.

According to embodiments, the billet transfer unit 60 comprises a billet buffer, configured to manage production imbalances between the casting machine 15 and the subsequent processing stations, and to manage any production interruptions in the steel production system 1.

Preferably, the billet transfer unit 60 comprises heat-insulating covers configured to retain the heat of the billets 5. The heat-insulating covers are provided for each line of the billet roller conveyor 5, as well as for the roller transfer table and for the buffer.

A continuous and high decarbonization steel production method according to the present invention comprises a first step of producing a plurality of semi-finished steel products with finished length, for example billets 5, by means of a continuous rolling machine 15 fed by a melting furnace 10, for example an electric arc furnace (EAF).

The steel production method comprises a second step of fast transferring billets 5 from the multi-line continuous casting machine 15 towards subsequent operating stations arranged successively along the direction of movement X of semi-finished steel products. For example, in this step the billets 5 are transferred from the multi-line continuous casting machine 15 to a reheating furnace 40.

The fast transfer step allows to reduce the travel times of the billets 5 produced by the multi-line continuous casting machine 15 towards the subsequent operating stations, so that the billets 5 can store the greatest amount of thermal energy remained from the casting step.

Experiments conducted by the Owner have determined that the casting temperatures for melting steel were comprised between 1,480 °C and 1,540 °C and that an average target temperature at the end of a heating step, i.e. an average rolling temperature, was 1,100 °C in order to be able to guarantee a nominal productivity of 160 t/h of steel.

The fast transfer step according to the present invention has made it possible to supply in input to the reheating furnace 40 a plurality of billets 5, the temperature gradient of which oscillated between two extreme values:
- a lower extreme with a temperature of 750 °C on the side of the billet at the inlet to the reheating furnace and with a calculated core temperature of approximately 820 °C; and
- an upper extreme with a temperature of 800 °C on the side of the billet at the inlet to the reheating furnace and with a calculated core temperature of about 900 °C.

This solution makes it possible to substantially decrease thermal losses during the process downstream of the steel production and to minimize delays along the entire process chain, resulting in reduced energy demand for heating the billets and higher productivity levels. By minimizing transfer delays and thermal losses of the billets, a lower energy demand for heating the billets inside the reheating furnace and an increase in effective capacity levels are obtained, with a fuel consumption lower by up to 80% and a productivity higher by more than 150% compared to a cold loading path of the billets.

Although conceptually simple, in practice this transfer involves challenges in creating a flexible and easily manageable interface between the casting lines and the subsequent stations downstream of the system, requiring the coordination of plants with different characteristics and production dynamics.

According to embodiments, this step comprises a simulation procedure configured to study and simulate various cases and operational scenarios, translating the results of the calculations into layouts and equipment capable of managing the production imbalances typical of continuous casting and rolling mills and of optimizing the flow of the thermal process. The method of high decarbonization producing steel comprises a third step of heating the billets 5, wherein the temperature value of the billets 5 is increased up to a predetermined value, a final heating temperature value, e.g. to a rolling temperature value. The final billet heating temperature value is calculated with high precision, maintaining a tolerance within +/- 10 degrees with respect to the required rolling temperature.

This step may involve using a reheating furnace 40, comprising, for example, flameless burners, preferably fed by mixtures of fuels included in the group ranging from natural gas to hydrogen. Such a combustion system produces hot fumes with a low oxygen content within a furnace chamber. For example, conducted experiments have emphasized that it is possible to maintain NOx emissions well below 80 mg/Nm³ (at 5% oxygen in dry exhaust gases) with combustion air temperature values well above 400 °C. To balance the productivity of the steel production system, continuous casting usually has multiple casting lines, with the result that the billets 5 are distributed in layers. Therefore, the temperature of the billets 5 entering the reheating furnace 40 cannot be constant from one billet 5 to the other, since each billet 5 follows a different transfer timing from the casting lines 17 to the reheating furnace 40 and is exposed to different cooling conditions. Thermo-numerical simulations of the different movement and operating conditions determine the temperature range of the billets 5 at the inlet of the reheating furnace 40 and the estimated temperature gradient within the section of the billet.

However, it should be noted that the use of hydrogen as a fuel requires significant amounts that are not readily available from the gas distribution companies and can only be produced locally by installing electrolysis plants. The standard electrolysis technologies, such as the alkaline, proton exchange membrane (PEM) or anion exchange membrane (AEM) one, have the inevitable defect of reduced efficiency, which implies significant levelized costs for the production and self-sufficient use of hydrogen. These costs are not offset by the current carbon emission pricing strategies.

For this reason, embodiments of the present invention also comprise a step of producing oxygen at the same time as the step of heating the billets by means of flameless burners. For example, this step may comprise:
- recovering the exhaust gas enthalpy after a heat recovery system (central recuperator, regenerative burners, etc.) as low-temperature steam from a steam generator in an exhaust gas duct; and
- supplying the low-temperature steam, as a source of enthalpy, to a solid oxide electrolyser cell (SOEC) for the production of hydrogen (and optionally O₂).

This step allows a reduction in electricity consumption by about 20-30% compared to alkaline, PEM or AEM technologies.

Preferably, the oxygen can also be recovered for the enrichment of the combustion air, further reducing the fuel consumption of the furnace by another 20%.

Optionally, the pure oxygen may be sent to an oxygen pipeline for melting operations.

The method of high decarbonization producing steel comprises a fourth step of transforming the process from batch to continuous by means of mutually welding, in a welding station 30, the billets 5 heated in the previous step, to obtain a single continuous semi-finished steel product 7.

This solution enables a continuous and uninterrupted production which improves the productivity and yield of the steel production system of the present invention. Conducted experiments have demonstrated that the elimination of downtime due to rolling with discrete billets 5 lengthens the production times and reduces specific consumption. Furthermore, welding the billets 5 reduced the consumption of natural gas used to heat the billets 5 in the previous step by more than 5% compared to a traditional rolling sequence, with a corresponding reduction in CO₂ emissions. This step also improved the yield by 2%, with a corresponding and further reduction of CO₂ emissions.

Finally, the reduction of rolling errors and the longer life of the components of the welding machine and of a mill during the rolling step in continuous mode have a positive impact on the reduction of CO₂ emissions thanks to the increase in the utilisation factor of the plant.

The method of high decarbonisation continuously producing steel comprises a fifth step of rolling the single semi-finished steel product 7 in a continuous rolling unit 20.

According to embodiments of the present invention, the method of high decarbonisation continuously producing steel comprises a further billet preheating step 5 prior to the third billet heating step 5.

This step increases and uniformizes the temperature of the billets 5, thus allowing the reheating furnace to be charged without interruptions with a plurality of billets 5 having the same temperature. Furthermore, this step allows to approach the temperature of the billets 5 to the required temperature at the exit from the reheating furnace 40, i.e. a rolling temperature, reducing the energy consumption required of the reheating furnace 40 and, above all, the times necessary to reach said temperature. According to embodiments, the heating and preheating steps are carried out by means of an electric heating unit and therefore by Joule effect. According to this advantageous feature it is possible to quickly heat billets from the ambient temperature to the required rolling temperature.

The direct heating system by Joule effect ensures uniform heating over the entire section of the material, drastically reducing the formation of flakes and decarburization. The system heats from the inside out, ensuring rapid and uniform heating with an internal temperature difference (ΔT) of less than 10 °C at the end of heating.

This heating system significantly improves the efficiency and versatility of billet heating, especially for heating quality and special steels, operating smoothly not only on batches of billets of the same size and grade, but also on batches of billets of different sizes and grades.

The heating system by Joule effect ensures a highly efficient transformation of energy, converting the high-voltage supply from the power grid to the necessary voltage levels in three steps, based on the specific heating needs. It achieves system efficiency of up to 90%, and even up to 93% under certain specific conditions. This high efficiency is in line with the technology performance improvement strategy, which envisages incremental reductions in energy intensity through better operation and upgrading to best available technology (BAT).

## Claims

1. A continuous high decarbonization steel production system comprising a plurality of operating stations (10, 15, 20, 30, 40, 45, 50, 60) arranged successively along a direction of movement of semi-finished steel products (X), said operating stations comprising:
- a melting furnace (10) configured to produce a metal bath;
- a multi-line continuous casting machine (15) configured to produce a plurality of semi-finished steel products (5);
- a transfer unit (60) of semi-finished steel products arranged downstream of the multiline continuous casting machine (15) and configured to transfer the semi-finished steel products (5) from the multiline continuous casting machine (15) to a subsequent operating station;
- a reheating furnace (40) arranged downstream of the transfer unit (60) and configured to heat the semi-finished steel products (5) to a predetermined temperature value;
- a welding station (30) arranged downstream of the heating furnace (40) and configured to weld the semi-finished steel products (5) together to obtain a continuous semi-finished steel product (7); and
- a continuous rolling unit (20), arranged downstream of the welding station (30) and configured to roll the continuous semi-finished steel product (7).

2. The steel production system according to claim 1, **characterised in that** the multi-line continuous casting machine (15) comprises a plurality of continuous casting lines (17), parallel to each other and each configured to produce a plurality of billets (5).

3. The steel production system according to claim 1, **characterised in that** it comprises a preheating unit (50) arranged downstream of the transfer unit (60) and configured to heat the semi-finished steel products (5) to a further predetermined temperature value.

4. The steel production system according to claim 1, **characterised in that** the rolling unit (20) comprises a single rolling mill.

5. The steel production system according to claim 1, **characterised in that** the reheating furnace (40) comprises a combustion heating system, or a direct electric heating system by Joule effect, or an induction heating system or mixed heating systems.

6. The steel production system according to claim 3, **characterised in that** the preheating unit (50) comprises a combustion heating system, or a direct electric heating system by Joule effect, or an induction heating system or mixed heating systems.

7. The steel production system according to any one of the preceding claims, **characterised in that** it comprises a billet buffer arranged upstream of the reheating furnace (40) along a direction of movement of semi-finished steel products (X).

8. A method of high decarbonisation continuously producing steel, comprising the steps of:
- producing a metal bath by means of a melting furnace (10);
- producing a plurality of semi-finished steel products (5) by means of a multi-line continuous casting machine (15) using the metal bath;
- heating the semi-finished steel products (5) to a predetermined temperature by means of a reheating furnace (40);
- welding the heated semi-finished steel products (5) to each other to obtain a continuous semi-finished steel product (7); and
- rolling the continuous semi-finished steel product (7) in a rolling mill train of a continuous rolling unit (20).

9. The method according to claim 8, **characterised in that** it comprises a step of adjusting the flow of the semi-finished steel products (5) by means of a buffer prior to the welding step.

10. The steel production method according to claim 8, **characterised in that** the heating step is carried out by Joule effect ensuring an internal ΔT of less than 10 °C.
